# EUROPÄISCHE PATENTANMELDUNG

(11) **EP 0 850 956 A2**
(43) Veröffentlichungstag der Anmeldung: **01.07.1998**
(21) Anmeldenummer: 97122690.7
(22) Anmeldetag: 22.12.1997
(51) Int. Cl.: C08F 2/22

(54) **Verfahren zur Herstellung wässriger Polymerisatdispersionen durch radikalische, wässrige Emulsions-polymerisation**

(30) Priorität: 23.12.1996 DE 19654168
(71) Anmelder: BASF AKTIENGESELLSCHAFT, 67056 Ludwigshafen (DE); MAX-PLANCK-GESELLSCHAFT ZUR FÖRDERUNG DER WISSENSCHAFTEN E.V., D-80539 München (DE)
(72) Erfinder: Rager, Timo, 55118 Mainz (DE); Meyer, Wolfgang, Dr., 55129 Mainz (DE); Wegner, Gerhard, Dr. Prof., 55127 Mainz (DE); Mathauer, Klemens, Dr., 67061 Ludwigshafen (DE); Mächtle, Walter, Dr., 67067 Ludwigshafen (DE); Schrof, Wolfgang, Dr., 67271 Neulingen (DE)
(74) Vertreter: Kinzebach, Werner, Dr.

(57) **Zusammenfassung**

Die vorliegende Erfindung betrifft ein Verfahren zur Herstellung wässriger Polymerisatdispersionen durch Polymerisation wenigstens einfach ungesättigter Monomere nach der Methode der radikalischen, wässrigen Emulsionspolymerisation, das dadurch gekennzeichnet ist, daß man vor und/oder während der Polymerisationsreaktion ein wasserlösliches, neutrales Salz und eine amphiphile Substanz zusetzt, die unter Polymerisationsbedingungen in Form von gefrorenen Micellen vorliegt.

Die vorliegende Erfinung betrifft weiterhin die nach diesem Verfahren erhältlichen Polymerisat-Dispersionen sowie die Polymerpulver, die durch Trocknung der Polymerisat-Dispersionen erhältlich sind.

## Beschreibung

Die vorliegende Erfindung betrifft ein Verfahren zur Herstellung wässriger Polymerisatdispersionen durch Polymerisation wenigstens einfach ungesättigter Monomere nach der Methode der radikalischen, wässrigen Emulsionspolyzmerisation.

Wässrige Polymerisatdispersionen finden aufgrund ihrer Eigenschaft, beim Verdampfen des wässrigen Dispersionsmediums Polymerisatfilme zu bilden, in vielfacher Weise Verwendung, beispielsweise als Bindemittel für Anstrichfarben, als Beschichtungsmassen für Leder und Papier, als Ausrüstung für Gewebe oder als Klebefilme. Aufgrund ihrer umweltfreundlichen Eigenschaften - sie enthalten in der Regel keine Lösungsmittel - gewinnen wässrige Polymerisatdispersionen zunehmend an Bedeutung.

Ein wesentliches Merkmal wässriger Polymerisatdispersionen ist der Durchmesser der in disperser Verteilung befindlichen Polymerisatteilchen, da eine Reihe anwendungstechnischer Eigenschaften wässriger Polymerisatdispersionen durch die Größe der Polymerisatteilchen bzw. durch deren Größenverteilung mitbestimmt wird. Beispielsweise weisen Verfilmungen aus feinteiligen wässrigen Polymerisatdispersionen einen erhöhten Glanz auf (vgl. z.B. Progress in Organic Coatings 6 (1978), S. 22). Ferner ist das Eindringvermögen feinteiliger wässriger Polymerisatdispersionen in poröse, aber dennoch relativ dichte Substrate wie Papier, Leder oder einen Putzuntergrund im Vergleich mit grobteiligen wässrigen Polymerisatdispersionen erhöht (z.B. Dispersionen synth. Hochpolymerer, Teil II, Anwendung, H. Reinhard, Springer-Verlag, Berlin (1969), Seite 4).

Andererseits weisen grobteilige wässrige Polymerisatdispersionen bei sonst gleicher Zusammensetzung und Feststoffkonzentration z.B. einen geringeren Fließwiderstand als feinteilige wässrige Polymerisatdispersionen auf (z.B. Dispersionen synth. Hochpolymerer, Teil II, Anwendung, H. Reinhard, Springer-Verlag, Berlin (1969), Seite 5). Ein vorteilhaftes Fließverhalten weisen auch wässrige Polymerisatdispersionen auf, deren Polymerisatteilchendurchmesser über einen größeren Durchmesserbereich verteilt sind (vgl. z.B. DE-A 42 13 965).

Eine zentrale Rolle im Rahmen der Herstellung einer wässrigen Polymerisatdispersion kommt daher der gezielten, für den jeweiligen Verwendungszweck maßgeschneiderten, reproduzierbaren Einstellung der Durchmesser der dispergierten Polymerisatteilchen zu.

Die wichtigste Methode zur Herstellung wässriger Polymerisatdispersionen ist die radikalische Emulsionspolymerisation wenigstens einfach ethylenisch ungesättigter Monomere, insbesondere die radikalische wässrige Emulsionspolymerisation.

Eine kontrollierte Durchführung der radikalisch wässrigen Emulsionspolymerisation ist dadurch möglich, daß man sie im Beisein eines im wässrigen Medium gelösten Tensids ausführt, wobei der Gehalt des wässrigen Mediums an Tensid in der Regel so bemessen wird, daß das Tensid oberhalb der kritischen Micellenbildungskonzentration (c.m.c.) liegt (vgl. z.B. High Polymer, Vol. IX, Emulsion Polymerisation, Interscience Publisher, Inc., New York, Third Printing, 1965, S. 1 ff). Weiterhin ist bekannt, daß durch Wahl der Tensidmenge die Größe der Polymerisatteilchen qualitativ gesteuert werden kann. So werden bei zunehmender Tensidmenge kleinere Polymerisatteilchen erzielt und umgekehrt (vgl. Dispersionen synthetischer Hochpolymerer, Teil I. S. Hölscher, Springer Verlager, Berlin 1969, S. 81). Leider läßt sich dieser qualitative Zusammenhang nicht zu einer gezielten Einstellung der Polymerisatteilchengrößen ausnutzen, da ein reproduzierbarer Zusammenhang zwischen der Polymerisatteilchengröße und der eingesetzten Tensidmenge in der Regel nicht gegeben ist.

Die EP-B 40 419 (z.B. S. 5, Zeilen 16 ff und Example 1), die DE-A 23 21 835 (z.B. S. 14, Zeile 9 ff) und die Encyclopedia of Polymer Science and Technology, Vol. 5, John Wiley & Sons Inc., New York (1966), S. 847 empfehlen zur gezielten Einstellung der Polymerisatendteilchengröße die Polymerisatteilchenbildungsphase und das Polymerisatteilchenwachstum voneinander zu entkoppeln. D.h., man setzt z.B. vor Beginn der radikalischen wässrigen Emulsionspolymerisation eine definierte Menge einer getrennt vorgebildeten wässrigen Polymerisatdispersion (Keim- oder Saat-Polymerisatdispersion) zu und läßt die in dieser Saat enthaltenen Polymerisatteilchen im Verlauf der eigentlichen radikalischen wässrigen Emulsionspolymerisation nur noch wachsen. Die Durchmesser der Saat-Polymerisatteilchen sowie das Mengenverhältnis von vorgelegten Saat-Polymerisatteilchen und zu polymerisierenden Monomeren bestimmen im wesentlichen die Größe der Polymerisatendteilchen in der resultierenden wässrigen Polymerisatdispersion. Je feinteiliger die Saat und je größer die eingesetzte Saatmenge desto kleiner sind die resultierenden Polymerisatendteilchen bei gegebener Monomerenmenge. Strebt man eine breite Verteilung der Durchmesser der Polymerisatteilchen an, setzt man dem Polymerisationsgefäß auch während der radikalischen wässrigen Emulsionspolymerisation der Monomeren zusätzliche Saat-Polymerisatdispersion zu. Auf diese Art und Weise umfaßt die resultierende wässrige Polymerisatdispersion verschiedene Generationen von bis zu unterschiedlicher Endgröße angewachsenen Saat-Polymerisatteilchen. Eine ähnliche Wirkung läßt sich auch dadurch erzeugen, daß man im Verlauf der radikalischen wässrigen Emulsionspolymerisation der Monomeren durch erhöhten Tensidzusatz Micellneubildung verursacht.

Nachteilig an der Methode der radikalischen wässrigen Emulsionspolymerisation unter Zusatz einer wässrigen Saat-Polyymerisatdispersion ist jedoch, daß die wässrige Saat-Polymerisatdispersion vor ihrem Gebrauch bevorratet werden muß, was aufgrund der prinzipiellen Empfindlichkeit wässriger Polymerisatdispersionen (sie streben danach ihre Grenzfläche zu verringern) gegenüber Frost, Scherung, Antrocknung und Erschütterung häufig problembehaftet ist. Außerdem erfordert eine identische Produktherstellung an verschiedenen Produktionsstandorten die entsprechende identische Verfügbarkeit einer solchen wässrigen Saat-Polymerisatdispersion. Ein zusätzliches Problem ist die reproduzierbare Erzeugung einer wässrigen Saat-Polymerisatdispersion.

Aufgabe der vorliegenden Erfindung ist daher die Bereitstellung eines Polymerisationsverfahrens nach der Methode der radikalischen wässrigen Emulsionspolymerisation, das die gezielte Herstellung von Polymerisatdispersionen mit definierten Polymerisatteilchengrößen erlaubt, wobei die Reproduzierbarkeit des Verfahrens der Reproduzierbarkeit einer Emulsionspolymerisation in Gegenwart eineer Saatdispersion erreichbar ist, ohne daß jedoch von einer Saatdispersion Gebrauch gemacht werden muß.

Es wurde nun überraschenderweise gefunden, daß bei einer wässrigen Emulsionspolymerisation die gewünschte Reproduzierbarkeit dann gewährleistet ist, wenn man die Emulsionspolymerisation in Gegenwart wenigstens eines wasserlöslichen, neutralen Salzes und wenigstens einer amphiphilen Substanz, die unter Polymerisationsbedingungen in Form von eingefrorenen Micellen vorliegt, durchführt.

Die vorliegende Erfindung betrifft somit ein Verfahren zur Herstellung wässriger Polymerisatdispersionen durch Polymerisation wenigstens einfach ungesättigter Monomere nach der Methode der radikalischen, wässrigen Emulsionspolymerisation, das dadurch gekennzeichnet ist, daß man vor und/oder während der Polymerisationsreaktion ein wasserlösliches, neutrales Salz und eine amphiphile Substanz zusetzt, die unter Polymerisationsbedingungen in Form von gefrorenen Micellen vorliegt.

Die Bezeichnung "amphiphil" besagt, daß die Substanz aus Molekülen (bzw. Oligomeren oder Polymereren) besteht, die sowohl hydrophile als auch hydrophobe Gruppen aufweisen. Hydrophile Gruppen sind solche, die an Grenzflächen Wasser/Öl in die Wasserphase gezogen werden, wohingegen hydrophobe Gruppen aus der wässrigen Phase herausgedrängt werden und sich zur Ölphase hin orientieren.

Die vorliegende Erfindung beruht auf der Beobachtung, daß eine Reihe amphiphiler Substanzen in wässrigen Systemen oberhalb einer gewissen Ionenstärke "gefrorene" Micellen ausbilden. Gefrorene Micellen, bzw. gefrorene micellare Systeme sind im Unterschied zu dem von den üblichen Emulgatoren gebildeten Micellen, bzw. micellaren Systemen, kinetisch stabil. Hierunter ist zu verstehen, daß die amphiphilen Moleküle, aus denen die Micellen aufgebaut sind, nur langsam oder nahezu gar nicht zwischen den gefrorenen Micellen ausgetauscht werden. Die mittlere Verweildauer amphiphiler Moleküle in gefrorenen Micellen beträgt daher in der Regel wenigstens 15 Minuten und kann bis zu mehrere Tage andauern.

Die für die Ausbildung gefrorener Micellen notwendige Ionenstärke wird im Prinzip dadurch erreicht, daß man den für die Bildung eingefrorener Micellen geeigneten amphiphilen Substanzen eine geringe Menge eines neutralen, wasserlöslichen Salzes zusetzt. Vorzugsweise verwendet man Salzkonzentrationen oberhalb 0,01 mol/l, besonders bevorzugt oberhalb 0,04 mol/l, insbesondere oberhalb 0,1 mol/l, besser oberhalb 0,4 mol/l und insbesondere oberhalb 1 mol/l. Geeignete Salze umfassen insbesondere die Alkalimetall- und Erdalkalimetallsalze von Mineralsäuren. Besonders bevorzugt werden Alkalimetall und Erdalkalimetallhalogenide, insbesondere die Chloride, wie Natriumchlorid, Kaliumchlorid, Calciumchlorid oder Bariumchlorid, die Alkalimetallsulfate wie Natrium- und Kaliumsulfat sowie die Alkalimetallphosphate wie Natriumphosphat, Kaliumphosphat, aber auch Natriummonohydrogenphosphat.

Gefrorene micellare Systeme sind weiterhin durch ihre niedrige kritische Micellbildungskonzentration (üblicherweise als molare Konzentration c.m.c. angegeben) charakterisiert. Hierunter ist die Konzentration zu verstehen, oberhalb derer die amphiphilen Moleküle nicht mehr molekular gelöst, sondern in Micellen aggregiert vorliegen. Vorzugsweise beträgt die c.m.c. der erfindungsgemäß zu verwendenden amphiphilen Substanz in einer wäßrigen, das neutrale wasserlösliche Salz enthaltenden Lösung bei 20°C und 1 atm ≤ 10^{-6,25} mol/l, besser ≤ 10^{-6,5} mol/l, besonders bevorzugt ≤ 10^{-6,75} mol/l besser ≤ 10^{-7,0} mol/l, ganz besonders bevorzugt ≤ 10^{-7,25} mol/l und noch besser ≤ 10^{-7,5} mol/l.

Die Bestimmung der im Falle gefrorener Micellen bei sehr geringen Konzentrationen liegenden c.m.c. der erfindungsgemäß zuzusetzenden amphiphilen Sutbstanzen kann beispielsweise durch Untersuchung der Konzentrationsabhängigkeit des Streuverhaltens (Classical Light Scattering From Polymer Solutions, Pavel Kratochvil, Elsevier, New York (1987), insbesondere Kap. 2.1.2) der relevanten wäßrigen Lösungen (klassische Lichtstreuung; Price, C. Pure Appl. Chem. 1983, 55, 1563; Price, C.; Chan, E.K.M.; Stubbersfield, R.B. Eur. Polym. J. 1987, 23, 649 und Price, C.; Stubbersfield, R.B.; El-Kafrawy, S.; Kendall, K.D. Br. Polym. J. 1989, 21, 391) bzw., soweit die Empfindlichkeit dieser Untersuchungsmethode nicht ausreichend ist, durch Untersuchungen des Fluoreszenzverhaltens von hydrophoben Farbstoffen wie Fluorol® 7GA oder Pyren, die sich im hydrophoben Innenbereich der Micellen anreichern und dabei ihr Fluoreszenzverhalten ändern, erfolgen (siehe z.B. Zhao, C.L.; Winnik, M.A.; Riess, G.; Croucher, M.D. Langmuir 1990, 6, 514; Wilhelm, M.; Zhao, C.L.; Wang, Y.; Xu, R.; Winnik, M.A. Macromolecules 1991, 24, 1033; Astafieva, I.; Zhong, X.F.; Eisenberg, A. Macromolecules 1993, 26, 7339 und Astafieva, I.; Khongaz K.; Eisenberg A., Macromolecules 1995, 28, 7127).

Bevorzugt sind gefrorene micellare Systeme, worin die Verweilzeit der amphiphilen Moleküle (im Konzentrationsbereich von 10⁻⁴ bis 10⁻³ mol/l; 20⁰C, 1 atm) in den Micellen wenigstens 30 min, vorzugsweise wenigstens 1 h, besonders bevorzugt wenigstens 5 h, ganz besonders bevorzugt wenigstens 10 h und besser wenigstens 20 h. Die mittlere Verweilzeit der amphiphilen Moleküle läßt sich in an sich bekannter Weise z.B. dadurch ermitteln, daß man aus zwei auf unterschiedliche Weise markierten amphiphilen Substanzen micellare Lösungen bereitet, diese miteinander vermischt und anschließend die Zeitabhängigkeit der Bildung von Micellen, die beide amphiphilen Substanzen enthalten, beobachtet.

Eine einfache Möglichkeit der Markierung besteht darin, die hydrophobe Gruppierung mit zwei voneinander verschiedenen Fluorophoren kovalent zu markieren, wobei die beiden Fluorophore so gewählt werden, daß bei ihrer Annäherung auf einen Abstand ≤ 10 nm das Fluoreszenzabklingen des einen (Donors) durch strahlungslosen Energietransfer (Förster-Transfer) zum anderen (Akzeptor) verkürzt wird (vgl. Förster, Zeitschrift für Naturforschung, Bd. A4 (1949), 321; The synthesis of polymers bearing terminal fluoreszent and fluorescence-quenching groups in Macromol. Chem., 191 (1990), 3069; Langmuir 1993, 1741-1748; Macromol. Chem. Macromol. Symp. 58 (1992), 195-199; Collect. (Czech. Chem. Commun. (Vol. 58), (1993), 2362; Macromolecules 1992, 25, 461-469).

Die Methode des strahlungslosen Energietransfers ermöglicht auch, den Übergang von klassischen micellaren Systemen zu gefrorenen micellaren Systemen bei Erhöhung der Ionenstärke, d.h. Zugabe eines neutralen wasserlöslichen Salzes, zu beobachten. So zeigen wäßrige Lösungen, die donormarkierte und akzeptormarkierte amphiphile Substanzen enthalten, welche in wässriger Lösung nur oberhalb einere bestimmten Ionenstärke "gefrorene" Mizellen bilden, in einer salzfreien wässrigen Lösung keinen oder nur einen geringen Förster-Transfer, wohingegen bei Erhöhung der Ionenstärke ein verstärkter Förster-Transfer zu beobachten ist. Dieser Effekt ist darauf zurückzuführen, daß die amphiphilen Substanzen aufgrund der Zugabe des Salzes eine signifikant verlängerte Aufenthaltswahrscheinlichkeit innerhalb einer Micelle aufweisen ("gefrorene Micelle"). Hierdurch sinkt im zeitlichen Mittel der durchschnittliche Abstand zwischen donormarkierten und akzeptormarkierten amphiphilen Molekülen, was einen verstärkten Förster-Transfer zur Folge hat. Mischt man umgekehrt getrennt zubereitete Lösungen von donormarkierten amphiphilen Substanzen und akzeptormarkierten amphiphilen Substanzen, die eine hinreichend hohe Salzkonzentration aufweisen, wird anfangs kein oder nur ein geringer Förster-Transfer beobachtet, der je nach mittlerer Aufenthaltsdauer der amphiphilen Moleküle innerhalb einer Micelle mit der Zeit zunimmt. Wegen weiterer Details hierzu und zur Bestimmung relavanter Parameter mittels isotopenmarkierten amphiphilen Substanzen sei hier auf die ältere Anzeldung DE 19602538.9 verwiesen, auf die hiermit im vollem Umfang Bezug genommen wird.

Weiterhin ist es günstig, wenn die erfindungsgemäß zu verwendende amphiphile Substanz so beschaffen ist, daß 1 l einer wässrigen Lösung des neutralen, wasserlölichen Salzes mit der für die Bildung eingefrorener Micellen notwendigen Ionenstärke bei 20°C und 1 atm wenigstens 10⁻³ mol, vorzugsweise wenigstens 10⁻² mol und besonders bevorzugt wenigstens 10⁻¹ mol bzw. 1 mol der amphiphilen Substanz in micellarer Lösung aufzunehmen vermag.

Gemäß eigenen Untersuchungen eignen sich nun micellare wässrige Lösungen der erfindungsgemäß zuzusetzenden amphiphilen Substanzen in besonderer Weise als Keimstätten zur kontrollierten Durchführung radikalischer wässriger Emulsionspolymerisationen von wenigstens einfach ethylenisch ungesättigten Monomeren.

Der Unterschied zu den micellaren wässrigen Lösungen der klassischen Tenside ist dabei vermutlich folgender. Wird im Beisein klassischer wässriger micellarer Systeme mit Beginn der radikalischen wässrigen Emulsionspolymerisation in einigen Micellen eine Polymerisatteilchenbildung ausgelöst, beginnen (aufgrund des raschen Austauschs) andere noch nicht initiierte Micellen sich aufzulösen, um die Oberfläche der wachsenden Polymerisatteilchen mitzustabilisieren, wodurch der quantitative Zusammenhang zwischen ursprünglich vorhandener Anzahl an Micellen und gebildeter Anzahl von Polymerisatteilchen verloren geht. Demnach führt die erfinungsgemäße Verwendung "gefrorener" micellarer Systeme (amphiphile Substanz + Salz) zu kleineren Polymerisatteilchendurchmessern als der Einsatz "nicht gefrorener" d.h. konventioneller micellarer Systeme.

Die durch die Zugabe von Salz gegebenfalls verstärkte Agglomerationsneigung der Polymerisatteilchen würde dementgegen zwar zu einer Verringerung der Polymerisatteilchenzahl und damit zu einer Vergröberung der Dispersion führen. Dieser Effekt kann jedoch durch geeignete Gegenmaßnahmen, beispielsweise durch Zugabe von wasserlöslichen, nichtionischen Polymeren (Schutzkolloiden, s.u.), z.B. Stärke oder Polyvinylalkohol, nichtionischen Emulgatoren, z.B. Fettalkoholethoxylate, oder durch Verwendung wasserlöslicher Monomere, z.B. (Meth)acrylamid, Hydroxyethyl(meth)acrylat, ausgeglichen werden.

Mit zunehmender kinetischer Stabilität der Micellen verringert sich das Erscheinungsbild der micellaren Auflösung im Verlauf der Ausbildung der Polymerisatteilchen und die Polymerisatteilchenbildungsphase nähert sich zunehmend dem Grenzfall, bei dem jede ursprünglich vorhandene Micelle Keimstätte eines Polymerisatteilchens wird. D.h., mit zunehmender kinetischer micellarer Stabilität vermag eine wäßrige micellare Lösung auf den Ablauf einer radikalischen wäßrigen Emulsionspolymerisation zunehmend so zu wirken wie eine wäßrige Saat-Polymerisatdispersion. Im Unterschied zu letzterer kann sie jedoch in reproduzierbarer Weise erzeugt und trocken bevorratet werden, was die Nachteile einer Saat-Polymerisatdispersionsbevorratung ausschließt.

Für das erfindungsgemäße Verfahren haben sich als amphiphile Substanzen insbesondere linear aufgebaute Blockpolymere, die wenigstens einen hydrophilen Homo- oder Cooligomerblock [A]ₐ, der sich von wasserlöslichen Monomer A ableitet und wenigstens einen hydrophoben Homo- oder Cooligomerblock [B]_{b}, der sich von Monomeren B mit einer Wasserlöslichkeit ≤ 50 g/l (25°C, 1 atm) ableitet. Hierin stehen die Indizes a und b für die mittlere Anzahl (Zahlenmittel) der in den jeweiligen Blöcken eingebauten Monomere A und Monomere B. Die Oligomerblöcke [A]ₐ bzw. [B]_{b} können jeweils aus einer Monomersorte A bzw. B aufgebaut sein (Homooligomerblöcke) oder verschiedene Monomere A bzw. B enthalten (Cooligomerblöcke). In den einzelnen Blöcken können die Monomere A bzw. B blockweise oder statistisch verteilt sein. Vorzugsweise bestehen die Oligomerblöcke jedoch jeweils aus einer Monomersorte. Die Oligomerblöcke [A]ₐ und [B]_{b} können direkt oder über konstitutionelle Einheiten S, die nicht Teil der Blöcke sind, miteinander verbunden sein. In der Regel enthalten Blockcopolymere an ihren Enden noch konstitutionelle Einheiten I bzw. T, die herstellungsbedingt sind. Diese konstitutionellen Einheiten leiten sich von den Polymerisationsinitiatoren (konstitutionelle Einheit I) und den Polymerisationskettenabrechern (konstitutionelle Einheit T) ab.

Bevorzugte Monomere A für den hydrophilen Block [A]ₐ umfassen vorzugsweise etylenisch ungesättigte Mono- oder Dicarbonsäuren mit 3 bis 6 C-Atomen, 2-Acrylamido-2-methylpropansulfonsäure, Styrolsulfonsäuren, Vinylsulfonsäuren sowie die Alkalimetall- und Amoniumsalze der genannten Säuren. Ebenfalls bevorzugt sind neutrale wasserlösliche Monomere wie N-Vinylpyrolidon, Etylenoxid, Propylenoxid und "Vinylalkohol". Besonders bevorzugte Monomere umfassen Acrylsäure, Methacrylsäure, Vinylsulfonsäure, 2-Acrylamido-2-methylpropansulfonsäure sowie deren Natrium-, Kalium- und Amoniumsalze. Ganz besonders bevorzugt umfassen die Monomere A Acrylsäure, Methacrylsäure und/oder deren K⁺-, Na⁺-, NH₄⁺-Salze.

Der hydrophobe Block [B]_{b} leitet sich vorzugsweise von Monomeren B ab, die ausgewählt sind unter vinylaromatischen Verbindungen, z.B. Styrol, α-Methyistyrol, Chlorstyrol und Vinyltoluol, Vinylestern von C₁-C₈-Alkancarbonsäuren, C₁-C₈-Alkylestern ethylenisch ungesättigter Monocarbonsäuren mit 3 bis 6 C-Atomen, konjugierten C₃-C₁₀-Dienen wie Butadien und Isopren und/oder C₃-C₆-Olefinen wie Ethylen, Propen, 1-Buten und iso-Buten. Besonders bevorzugte Monomere B umfassen Styrol, α-Methylstyrol, Chlorstyrol, Vinylacetat, Vinylpropionat, Methylacrylat, Etnylacrylat, n-Butylacrylat, 2-Ethylhexylacrylat und Methylmethacrylat. Ganz besonders bevorzugte Monomere B umfassen Styrol, Methylmetacrylat, n-Butylacrylat und 2-Ethylhexylacrylat, insbesondere Styrol und/oder Methylmetacrylat.

Hier und im folgenden versteht man unter C1-C8-Alkyl beispielsweise Methyl, Ethyl, n- und iso-Propyl, 1-, 2-, iso- und tert.-Butyl, Pentyl, Hexyl, Octyl, 2-Ethylhxyl etc. Ethylenisch ungesättigte Carbonsäuren umfassen unter anderem Acrylsäure, Methaccrylsäure, Crotonsäure, iSO-Crotonsäure, 2-Ethylacrylsäure.

Die genannten Blockpolymere bilden in Gegenwart des neutralen, wasserlöslichen Salzes bevorzugt dann eingefrorene Micellen, wenn die Anzahl b der Monomere B in dem hydrophoben Block eine Zahl ≥ 5, vorzugsweise ≥ 10 und insbesondere ≥ 20 ist. Die Neigung zur Bildung eingefrorener Micellen steigt mit der Größe der Blocklänge. Besonders ausgeprägt ist die Bildung eingefrorener Micellen bei Blockpolymeren, worin b ≥ 30 und ganz besonders bevorzugt ≥ 40 ist. Erfindungsgemäß werden bevorzugt solche Blockpolymere verwendet, worin die Summe aller eingebauten Monomere B (entsprechend der Summe aller b) die Zahl 1000, insbesondere 800, meist 600 und häufig 400 nicht ubersteigt. Von besonderem Interesse sind Blockpolymere, worin die Anzahl aller Monomere B im Bereich von 20 bis 200 und insbesondere im Bereich von 30 bis 150 liegt.

Mit Vorteil wird der Block B hinsichtlich seiner Monomerenzusammensetzung und seiner Länge so gewählt, daß er als unabhängiges Polymer eine Glasübergangstemperatur Tg ≥ 20, bevorzugt ≥ 40, besonders bevorzugt ≥ 60, ganz besonders bevorzugt ≥ 80 und noch besser ≥ 100°C aufweist. Tg meint dabei die quasi-statische Glasübergangstemperatur gemessen mittels DSC (differential scanning Calorimetry, 20°C C/min., midpoint) nach DIN 53765. Die oberen Grenzwerte für Tg im Fall von hohen Molekulargewichten und homopolymeren Blöcken B weist z.B. Tab. 8 in Ullmann's Encyclopedia of Industrial Chemistry, VCH, Weinheim (1992), Vol. A21, S.169 aus.

Hinsichtlich der Länge der Blöcke [A]ₐ besteht lediglich die Anforderung, daß die Zahl der eingebauten Monomere A ausreichend ist, um eine gewisse Löslichkeit der Blockpolymere im Wässrigen zu gewährleisten. Dies ist in der Regel dann der Fall, wenn die summe der im Blockpolymeren eingebaute Monomere A (entsprechend der Summe aller a) wenigstens 50%, vorzugsweise wenigstens 75% der Zahl aller im Blockpolymer eingebauten Monomere B ausmacht. Vorzugsweise übersteigt die Summe aller eingebauten Monomere A die Summe aller im Blockpolymer eingebauten Monomere B. Die Summe aller im Blockpolymer eingebauten Monomere A kann 2500 und mehr betragen. Wird jedoch das Verhältnis der Zahl der eingebauten hydrophilen Monomere zu der Zahl der eingebauten hydrophoben Monomere zu groß, wandelt sich die micellare wässrige Lösung in der Regel in eine molekulare wässrige Lösung um.

Besonders bevorzugt sind Blockpolymere, worin die Blocklänge der hydrophoben Blöcke und die Blocklänge der hydrophilen Blöcke vergleichbar sind. Hierbei ist zu beachten, daß bei molekulargewichtlich uneinheitlichen Blockpolymeren alle gemachten Aussagen auf die mittlere Anzahl der in das Blockpolymer eingebauten Monomere bezieht, entsprechend dem Zahlenmittel der Summe aller a bzw. der Summe aller b.

Ganz besonders bevorzugt werden solche Blockpolymere, die aus einem hydrophilen Block und einem hydrophoben Block bzw. zwei hydrophilen und einem hydrophoben Block aufgebaut sind. Läßt man die die verschiedenen Blöcke gegebenenfalls miteinander verknüpfenden konstitutionellen Einheiten S sowie die Initiatoreinheiten I und gegebenenfalls vorliegenden Modorator und Abbruchreste T unberücksichtigt, dann lassen sich die Diblockcopolymere gemäß der Formel I bzw. I'

[A]ₐ[B]_{b} (I)

[B]_{b}[A]ₐ (I')

und die Triblockcopolymere gemäß der Formel II

[A]ₐ[B]_{b}[A']ₐ (II)

darstellen. Hierin haben A bzw. A', B, a bzw. a' und B die zuvorgenannten Bedeutungen. Konventionsgemäß stellt der linke Formelteil den Kettenanfang, welcher eine Initiatoreinheit I trägt, und der rechte Formelteil das Kettenende, welches die Abbrucheinheit T trägt, dar.

Generell bevorzugt werden als erfindunsgemäße amphiphile Substanzen solche Di- und Tri-Blockpolymere der allgemeinen Formeln I, I', II, deren hydrophile Blöcke A polyelektrolytischer Natur sind (d.h. nicht nichtionisch, sondern in wäßrigem Medium in ein Polyion und Gegenionen dissoziierend).

Nachfolgend seien einige individuelle Beispiele erfindungsgemäß geeigneter amphiphiler Blockpolymere aufgeführt:
[Acrylsäure]₇₅[Methylmethycrylat]₇₀
[Acrylsäure]₇₀[Methylmethycrylat]₇₀
[Acrylsäure]₄₀[Methylmethycrylat]₄₀
[Acrylsäure]₃₅[Methylmethycrylat]₃₅
[Acrylsäure]₄₅[Methylmethycrylat]₂₀
[Acrylsäure]₄₀[Methylmethycrylat]_{20.}
[Acrylsäure]₇₉[Methylmethacrylat]₃₉
[Acrylsäure]₃₃[Methylmethacrylat]₃₆
[Acrylsäure]₁₀₅[Methylmethacrylat]₃₅
[Acrylsäure]₃₀[Methylmethacrylat]₂₈
[Acrylsäure]₃₀[Methylmethacrylat]₂₅
[Acrylsäure]₂₆[Methylmethacrylat]₁₈

Die aufgeführten Blockpolymere weisen am Kettenbeginn eine Initatoreinheit I, beispielweise einen 1,1-Diphenylhexylrest und am Kettenende eine Abbrucheinheit T, beispielsweise ein Wasserstoffatom auf. Ebenfalls geeignete Blockpolymere sind die in der älteren Anmeldung DE 196 02 538.9 angegebenen Blockpolymere. Auf diese Druckschrift wird hiermit im vollen Umfang Bezug genommen.

Blockpolymere sind in einfacher Weise dadurch erhältlich, daß man zunächst eine Sorte von monomeren Bausteinen sukzessive aneinanderreihend miteinander verknüpft, anschließend diese Verknüpfung mit einer anderen Sorte von monomeren Bausteinen fortsetzt, nachfolgend gegebenenfalls weitere Wechsel der monomeren Bausteinsorte durchführt und so nach Bedarf Di-, Tri- und höhere Blockpolymere erzeugt. Ausgehend von Wenigstens eine Vinylgruppe aufweisenden monomeren Bausteinen kann die Verknüpfung sowohl innerhalb des einzelnen Blocks als auch zwischen den Blöcken z.B. in an sich bekannter Weise durch initiierte Polymerisation erfolgen (Stichwort: "living polymers"; vgl. z.B. Ullmanns Encyklopädie der technischen Chemie, Bd. 13, 4. Auflage, Verlag Chemie, New York, S. 599). Die initiierte Polymerisation wird dabei in an sich bekannter Weise so gestaltet, daß man nach vollständigem Verbrauch einer Monomerensorte entweder noch aktive oder durch geeignete Maßnahmen wieder aktivierbare Makroinitiatoren erhält, die nach Zugabe der nächsten Monomerensorte weiterwachsen, bis ihre Aktivität durch Zugabe geeigneter Inhibitoren bewußt gelöscht wird.

Eine besonders häufig angewandte Methode einer solchen initiierten sequentiellen Polymerisation ist die sequentielle anionische Polymerisation ( vgl. z.B. US-A 3 251 905; US-A 3 390 207; US-A 3 598 887; US-A 4 219 627; Macromolecules 1994, 27, 4908; Polymer, 1991, Volume 32, Number 12, 2279; Macromolecules 1994, 27, 4615; Macromolecules 1994, 27, 4635 und Macromolecules 1991, 24, 4997). Sie verläuft wie die radikalisch initiierte Polymerisation nach dem Schema einer Kettenreaktion. Als Initiator fungiert jedoch kein Starter-Radikal sondern ein Starter-Anion, das seine Ladung an das wachsende Makromolekül abgibt, welches so seinerseits als Starter-Anion zu wirken und weiter zu wachsen vermag. Verläuft die Startreaktion im Vergleich zur Wachstumsreaktion sehr schnell, sind sehr enge Molekularmassenverteilungen erhältlich.

Ist ein wenigstens eine ethylenisch ungesättigte Gruppe aufweisendes Monomer nicht anionisch polymerisierbar, so kann die Verfahrensweise dahingehend abgeändert werden, daß man z.B. radikalisch oder kationisch initiert weiterpolyznerisiert. Die Übergangsmöglichkeiten von anionischer Polymerisation auf anders initiierte Wachstumsmechanismen sind beispielsweise beschrieben in: P. Rempp, E. Franta, J.E. Herz, Advances in Polymer Science 1988, S. 164-168.

Aber auch der Anschluß von durch anionisch initiierte Polymerisation erzeugten Blöcken an Blöcke, die nur durch Polykondensation oder Polyaddition monomerer Bausteine erhältlich sind (z.B. Polyester oder Polyurethane) ist möglich, indem beispielsweise ein mit einer geeigneten funktionellen Endgruppe versehener anionisch erzeugter Block bei einer Polykondensation zugegeben wird (z.B. R.N. Young, R.P. Quirk, L.J. Fetters, Advances in Polymer Science, Vol. 56, S. 70, 1984). Wilhelm, M. et al. Macromolecules, 1991, 24, 1033, betrifft z.B. Polystyrol-Polyethylenoxid-Di-Blockpolymere. Die Herstellung von Blockpolymeren durch radikalische Polymerisation mit Hilfe von funktionellen Initiatoren oder Makroinitiatoren beschreiben z.B. B. Riess, G. Hurtrez, P. Bahadur in "Encyclopedia of Polymer Science and Engineering", Vol. 2, 327-330, Wiley & Sons (1985).

Die US-A 4 581 429, US-A 5 322 912 und US-A 5 412 047 beschreiben die Herstellung von Blockpolymeren via pseudo-lebender radikalischer Polymere. Diese Verfahrensweise ist im wesentlichen auf alle wenigstens eine ethylenisch ungesättigte Gruppe aufweisenden Monomeren anwendbar und ermöglicht auch die Herstellung von Blockpolymeren mit besonders einheitlichem Molekulargewicht.

Selbstverständlich können aus Blockpolymeren durch nachfolgende chemische Umsetzungen (z.B. polymeranaloge Umsetzungen) andere Blockpolymere hergestellt werden.

Polymer Preprints (Am. Chem. Soc. Div. Polym. Chem.) 29 (1988), 425-426 betrifft z.B. Di-Blockpolymere, die durch anionische sequentielle Polymerisation von zunächst einem Alkylester der Methacrylsäure und nachfolgend Glycidylmethacrylat sowie anschließender Umwandlung der Oxiranylgruppen in β-Hydroxysulfonatgruppen erhältlich sind. Macromolecules 1993, 26, 7339-7352 offenbart z.B. die Herstellung von Polystyrol-Polyacrylsäure-Di-Blockpolymeren durch Hydrolyse von Polystyrol-Poly(tert.-Butylacrylat)Di-Blockpolymeren.

Generell kann eine Verknüpfung von getrennt vorgefertigten polymeren Blöcken dann erfolgten, wenn diese geeignete funktionelle Endgruppen aufweisen (vgl hierzu auch EP-A 665 240, auf die hiermit ebenfalls Bezug genommen wird).

Bemerkenswerterweise solubilisieren die micellaren wässrigen Lösungen der erfindungsgemäß zuzusetzenden amphiphilen Substanzen nach der Methode der radikalischen wässrigen Emulsionspolymerisation zu polymerisierende, wenigstens einfach ethylenisch ungesättigte Monomere selektiver als die micellaren wässrigen Lösungen der klassischen Tenside. D.h., bei ihrer Verwendung zur kontrollierten Durchführung radikalischer wässriger Emulsionspolymerisationen ist es empfehlenswert, den hydrophoben micellaren Kern und die zu polymerisierenden Monomeren aufeinander abzustimmen, d.h. einander chemisch ähnlich zu wählen.

Die Durchführung des erfindungsgemäßen Verfahrens zur Herstellung einer wässrigen Polymerisatdispersion durch Polymerisation von wenigstens einfach ungesättigten Monomeren nach der Methode der radikalischen wässrigen Emulsionspolymerisation kann in einfacher Weise so erfolgen, daß man in einem Polymerisationsgefäß eine wässrige Lösung der erfindungsgemäß zuzusetzenden amphiphilen Substanz und des wasserlöslichen neutralen Salzes, gegebenenfalls weiteres wässriges Dispergiermedium, die zu polymerisierenden Monomeren und den radikalischen Polymerisationsinitiator miteinander vermischt, das Gemisch unter Rühren auf die Polymerisationstemperatur erwärmt und unter Rühren die Polymerisation bis zum gewünschten Polymerisationsumsatz aufrechterhält.

Die amphiphile Substanz und das wasserlösliche, neutrale Salz können als solche getrennt oder gemeinsam dem Reaktionsgefäß zugesetzt werden, mit der Maßgabe, daß zum Zeitpunkt, an dem das Vorliegen eingefrorener Micellen gewünscht wird, die Ionenstärke des Polymerisationsmediums für die Ausbildung gefrorener Micellen ausreichend ist. Hierbei ist zu beachten, daß die gewünschte Polymerisatteilchengröße durch die Menge an amphiphiler Substanz gesteuert wird, wohingegen die Menge an wasserlöslichem, neutralem Salz lediglich für die Ausbildung gefrorener Micellen verantwortlich ist. Diese hängt in der Regel von der jeweiligen amphiphilen Substanz ab, jedoch nur in untergeordnetem Maße von der Menge an eingesetzter amphiphiler Substanz. Bevorzugt wird die amphiphile Substanz in Form einer wässrigen Lösung dem Polymerisationsgefäß zugesetzt. Hierbei kann es erforderlich sein, die amphiphile Substanz zuerst in einem mit Wasser mischbaren, organischen Lösungsmittel oder in ein Gemisch aus Wasser und einem solchen organischen Lösungsmittel vorzulösen (beispeilsweise in Dioxan, Tedrahydrofuran oder deren Gemischen mit Wasser). Hieraus lassen sich dann wässrige Lösungen der amphiphilen Substanz gewinnen, in dem man das organische Lösungsmittel, sei es durch Dialyse oder durch mehrfache Zugabe von Wasser gefolgt von destillativer Abtrennung des organischen Lösungsmittels, durch Wasser substituiert. Die erforderliche Menge an Salz kann entweder dem Polymerisationsgefäß zugegeben werden oder der wässrigen Lösung der amphiphilen Substanz. Bevorzugt werden jedoch die amphiphile Substanz und das neutrale, wasserlösliche Salz gemeinsam in wässriger Lösung dem Polymerisationsgefäß zugesetzt.

In der Regel beträgt die Menge an erfindungsgemäß zugesetzter amphiphiler Substanz 0,1 bis 15, vorzugsweise 0,5 bis 6 Gew.-%, bezogen auf die zu polymerisierenden Monomeren. Die einzusetzende Salzmenge richtet sich nach der für die ausbildung gefrorener micellarer Systeme erforderlichen Konzentration (so.). Bei Bedarf kann man die micellare Anzahl in der wäßrigen Lösung aus dem micellaren Molekulargewicht (z.B. aus dem Sedimentationslauf der analytischen Ultrazentrifuge o. durch klassische Lichtstreuung zu bestimmen) und der Einwaage berechnen und so die gewünschte Polymerisatteilchenzahl im voraus festlegen.

Der Beschaffenheit des Dispergiermediums und dem verwendeten Initiatorsystem angepaßt bewegt sich die Polymerisationstemperatur normalerweise zwischen 20 und 100°C. Oft beträgt sie 50 bis 95°C und häufig liegt sie bei 70 bis 90°C. Selbstverständlich wird das erfindungsgemäße Verfahren normalerweise unter Inertgas und unter Rühren ausgeführt.

Üblicherweise erfolgt die radikalische wässrige Emulsionspolymerisation bei Normaldruck ( 1 atm). Sie kann jedoch, insbesondere bei Verwendung von bei Normaldruck gasförmigen Monomeren, auch unter erhöhtem Druck erfolgen. In entsprechender Weise sind auch Polymerisationstemperaturen oberhalb von 100°C möglich (z.B. bis 130°C). Die ebenda genannten Bedingungen sind auch für die übrigen in dieser Schrift behandelten Verfahren der radikalischen wässrigen Emulsionspolymerisation typisch. Bei der beschriebenen Emulsionspolymerisationsweise, bei der man die Gesamtmenge des Polymerisationsansatzes ins Polymerisationsgefäß vorlegt, wird die Größe der entstehenden Polymerisatteilchen im wesentlichen durch die Art und Menge der im Ansatz enthaltenen erfindungsgemäß zuzusetzenden amphiphilen Substanz bestimmt. Mit zunehmender Menge der im Ansatz enthaltenen amphiphilen Substanz werden kleinere Polymerisatteilchen erzielt und umgekehrt. Mit einer Verdopplung der im Polymerisationsansatz enthaltenen Menge der relevanten amphiphilen Substanz geht normalerweise eine Verdopplung der Anzahl gebildeter, in disperser Verteilung befindlicher, Polymerisatteilchen einher.

Bei den in der Praxis relevanten Polymerisatgehalten (in der Regel > 25 Gew-%) bestehen bei der Polymerisationsweise unter Gesamtansatzvorlage z.B. Probleme hinsichtlich der technischen Beherrschbarkeit der Abführung der exothermen Wärmetönung der Polymerisationsreaktion.

Im technischen Maßstab wird die radikalische wässrige Emulsionspolymerisation daher in der Regel nach dem Zulaufverfahren durchgeführt. D.h., die überwiegende Menge (in der Regel 50 bis 100 Gew.-%) der zu polymerisierenden Monomeren wird dem Polymerisationsgefäß gemäß des Fortschreitens der Polymerisation der bereits im Polymerisationsgefäß befindlichen Monomeren (Polymerisationsumsatz in der Regel ≥ 80, oder ≥ 90 oder ≥ 95 mol-%) zugesetzt. Zur kontrollierten Einstellung der Teilchengröße der resultierenden wässrigen Polymerisatdispersion legt man beim Zulaufverfahren erfindungsgemäß üblicherweise eine micellare, d.h. eine das neutrale, wasserlösliche Salz und die amphiphile Susbstanz enthaltende wässrige Lösung ins Polymerisationsgefäß vor. Das Mengenverhältnis aus vorgelegten Micellen (und deren Art) und zu polymerisierenden Monomeren bestimmt im wesentlichen die Größe der Polymerisatteilchen in der resultierenden wässrigen Polymerisatdispersion. Je kleiner die vorgelegten Micellen und je größer ihre Anzahl, desto kleiner sind die resultierenden Polymerisatteilchen bei gegebener Monomerenmenge. Vervielfacht man die vorgelegte Anzahl Micellen, vervielfacht sich bei der erfindungsgemäßen Verfahrensweise in der Regel die Anzahl an gebildeten Polymerisatteilchen in entsprechender Weise. Vorzugsweise werden beim Zulaufverfahren maximal bis zu 20 Gew.-% der zu polymerisierenden Monomeren ins Polymerisationsgefäß mitvorgelegt. Nach Beginn der radikalischen wässrigen Emulsionspolymerisation erfolgt der Zulauf der übrigen Monomeren innerhalb des erfingungsgemäßen Zulaufverfahrens so, daß zu jedem Zeitpunkt der Zufuhr der Polymerisationsumsatz der bereits zuvor dem Polymerisationsgefäß insgesamt zugeführten Monomeren wenigstens 80 mol-%, vorzugsweise wenigstens 90 mol-% beträgt.

Die Art und Weise, in der das radikalische Initiatorsystem im Verlauf der erfindungsgemäßen radikalischen wäßrigen Emulsionspolymerisation dem Polymerisationsgefäß beim Zulaufverfahren zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf des erfindungsgemäßen Zulaufverfahrens kontinuierlich oder stufenweise zugesetzt werden. Im einzelnen hängt dies in dem Durchschnittsfachmann an sich bekannte Weise sowohl von der chemischen Natur des Initiatorsystems als auch von der Polymerisationstemperatur ab.

Wird im Rahmen des erfindungsgemäßen Zulaufverfahrens auch oder nur während der Monomerenzufuhr von der erfindungsgemäß zuzusetzenden amphiphilen Substanz ins Polymerisationsgefäß gegeben (d.h., umfaßt die Vorlage nicht dessen Gesamtmenge), so bewirkt dies in der Regel eine kontrollierte Verbreiterung der Größenverteilung der resultierenden Polymerisatteilchen. Vorzugsweise erfolgt die Zufuhr der erfindungsgemäß zuzusetzenden amphiphilen Substanz auch hier in Form einer vorgefertigten micellaren, d.h. einer das neutrale, wasserlösliche Salz und die amphiphile Susbstanz enthaltenden wässrigen Lösung. Dabei können z.B. die Zulaufverfahren der DE-A 42 13 969, der DE-A 42 13 968, der DE-A 42 13 967, der DE-A 42 13 964 und der DE-A 42 13 965 in übertragener Weise angewendet werden, um entsprechend hochkonzentrierte wässrige Polymerisatdispersionen herzustellen. Die in den vorgenannten Offenlegungsschriften zu verwendenden wässrigen Ausgangsdispersionen sind dazu in einfacher Weise durch entsprechende erfindungsgemäße micellare wässrige Lösungen zu ersetzen.

Als radikalische Polymerisationsinitiatoren kommen für das erfindungsgemäße Verfahren alle diejenigen in Betracht, die in der Lage sind, eine radikalische wässrige Emulsionspolymerisation auszulösen. Es kann sich dabei sowohl um Peroxide, z.B. Alkalimetallperoxidisulfate, als auch um Azoverbindungen handeln. Für Polymerisationen bei tiefen Temperaturen werden vorzugsweise kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalemetallperoxidsulfate und/oder Ammoniumperoxidisulfat angewendet werden. Anstelle eines wasserlöslichen Eisen(II)-Salzes wird häufig eine Kombination aus wasserlöslichen Fe/V-Salzen benutzt.

In der Regel beträgt die Menge der eingesetzten radikalischen Initiatorsysteme, bezogen auf die Gesamtmenge der zu polymerisierenden Monomeren, 0,1 bis 2 Gew.-%.

Bemerkenswerterweise erfordert das erfindungsgemäße Verfahren nicht notwendigerweise die Mitverwendung zusätzlicher Dispergiermittel um eine wässrige Polymerisatdispersion befriedigender Stabilität zu erhalten. Solche an weiteren Dispergiermitteln freie nach dem erfindungsgemäßen Verfahren erhältliche wäßrige Polymerisatdispersionen sind insofern von Vorteil, als sie eine besonders geringe Neigung zum Schäumen und eine vergleichsweise hohe Oberflächenspannung aufweisen.

Selbstverständlich können im Rahmen des erfindungsgemäßen Verfahrens jedoch konventionelle Dispergiermittel zum Zwecke einer weitergehenden Stabilisierung der dispersen Verteilung der erzeugten Polymerisatteilchen mitverwendet werden. Zur Aufrechterhaltung der Kontrolle über das erfindungsgemäße Verfahren ist bei einer Mitverwendung zusätzlicher Dispergiermittel jedoch vorzugsweise darauf zu achten, daß die Mengen so bemessen werden, daß die c.m.c.'s dieser zusätzlichen Dispergiermittel nicht überschritten werden. Häufig empfiehlt es sich, nach Beendigung der erfindinngsgemäßen radikalischen wässrigen Emulsionspolymerisation durch Zusatz konventioneller Dispergiermittel nachzustabilisieren.

Beispiele für solche konventionelle Dispergiermittel sind die klassischen Tenside. Beispielhaft genannt seien Dowfax® 2A1 der Dow Chemical Company, ethoxylierte Mono-, Di- und Tri-Alkylphenole (EO-Grad: 3 bis 50, Alkylrest: C₄ bis C₉), ethoxylierte Fettalkohole (EO-Grad: 3 bis 50, Alkylrest: C₈ bis C₃₆), sowie Alkali- und Ammoniumsalze von Alkylsulfaten (Alkylrest: C₈ bis C₁₂), von Schwefelsäurehalbestern ethoxylierter Alkohole (EO-Grad: 4 bis 30, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Weitere geeignete Tenside finden sich in Houben-Weyl, Methoden der organischen Chemie, Band XIV/1, Makromolekulare Stoffe, Georg-Thieme Verlag, Stuttgart, 1961, Seiten 192 bis 208. Anstelle von oder im Gemisch mit klassischen Tensiden können aber auch konventionelle Schutzkolloide wie Polyvinylalkohol, Polyvinylpyrrolidon oder amphiphile Blockpolymere mit kurzen hydrophoben Blöcken zur Co-Stabilisierung eingesetzt werden. In der Regel wird die mitverwendete Menge an konventionellen Dispergiermitteln, bezogen auf die zu polymerisierenden Monomeren, 3, bzw. 2 Gew.-% nicht überschreiten.

Als radikalisch polymerisierbare Monomere kommen für das erfindungsgemäße Verfahren insbesondere in Betracht monoethylenisch ungesättigte Monomere wie Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie C₄₋₈-konjugierte Diene wie 1,3-Butadien und Isopren in Betracht. Die genannten Monomeren bilden in der Regel die Hauptmonomeren, die, bezogen auf die Gesamtmenge der nach dem erfindungsgemäßen Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, silanisierte Monomere wie γ-Methacryloxypropylsilan oder Vinyltrimethoxysilan, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisatonszone zugegeben.

Insbesondere lassen sich nach dem erfindinngsgemäßen Verfahren solche Monomerengemische in kontrollierter Weise nach der Methode der radikalischen wässrigen Emulsionspolymerisation zu wässrigen Polymerisatdispersionen polymerisieren, die
- 70 bis 100 Gew.-% aus Estern der Acryl- und/oder Methacrylsäure mit 1 bis 12 C-Atome aufweisenden Alkanolen und/oder Styrol oder
- 70 bis 100 Gew.-% aus Vinylchlorid und/oder Vinylidenchlorid oder
- 70 bis 100 Gew.-% aus Styrol und/oder Butadien oder
- 40 bis 100 Gew.-% aus Vinylacetat, Vinylpropionat und/oder Ethylen
umfassen. Die Acrylatgemische umfassen insbesondere auch nachfolgende Mononerenzusammensetzungen:
- 70 bis 99 Gew.-%: wenigstens eines Esters der Acryl- und/oder Methacrylsäure mit 1 bis 8 C-Atome aufweisenden Alkanolen,
- 1 bis 5 Gew.-%: wenigstens eines Monomeren aus der Gruppe umfassend Acrylsäure, Methacrylsäure sowie die K^{⊕}-, Na^{⊕}- und Ammoniumsalze dieser Säuren,
- 0 bis 25 Gew.-%: Vinylacetat, Styrol oder deren Gemisch.

Abschließend sei nochmals festgehalten, daß die Attraktivität gefrorener micellarer Systeme, d.h. die Kombination der erfindungsgemäß zuzusetzenden amphiphilen Substanen mit dem neutralen wasserlöslichen Salz, als Hilfsmittel für die radikalische wäßrige Emulsionspolymerisation nicht in einer die Oberflächenspannung des wässrigen Mediums verringernden und damit die disperse Verteilung stabilisierenden Wirkung liegt. Vielmehr besticht der kontrollierender Einfluß gefrorener micellarer Systeme auf die resultierende Anzahl dispergierter Polymerisatteilchen. Ihre die disperse Verteilung der erzeugten Polymerisatteilchen trotz geringer Beeinflussung der Oberflächenspannung des Wassers gleichzeitig stabilisierende Wirkung überrascht in ihrem Ausmaß. Bemerkenswert ist, daß die erfindungsgemäß resultierenden wäßrigen Polymerisatdispersionen sowohl als Bindemittel (z.B. Papierstreichmassen, Innenfarben, Fasermatten) als auch als Klebstoffe oder Additive in mineralisch abbindenden, z.B. zementösen, Massen geeignet sind. Die mit der geringen Herabsetzung der Oberflächenspannung durch eingefrorene micellare Systeme einhergehende verringerte Schaumbildungstendenz ist ein weiterer Vorteil dieses Verfahrens

Schließlich sei festgehalten, daß die Feststoffvolumenkonzentration von erfindungsgemäß erhältlichen wäßrigen Polymerisatdispersionen 10 bis 70 Vol.-%, oder 25 bis 70 Vol.-%, oder 35 bis 70 Vol.-% oder 45 bis 70 Vol.-% betragen kann. Der resultierende zahlenmittlere Polymerisatteilchendurchmesser kann bei 10 bis 2000 nm, 50 bis 1500 nm, 100 bis 1000 nm, 200 bis 750 nm oder 300 bis 500 nm liegen.

Auch sei festgehalten, daß erfindungsgemäß erhältliche wäßrige Polymerisatdispersionen in einfacher Weise ohne zusätzliche Hilfsmittel zu redispergierbaren Polymerisatpulvern trockenbar sind (z.B. Gefriertrocknung oder Sprühtrocknung). Dies gilt insbesonders dann, wenn die Glasübergangstemperatur der zugesetzten amphiphilen Substanz ≥ 60°C, vorzugsweise ≥ 70°C, besonders bevorzugt ≥ 80°C und ganz besonders bevorzugt ≥ 90°C bzw. ≥ 100°C beträgt.

### Beispiele

1) Anlytik
1a Molekulargewicht (Zahlenmittel Mₙ)
   Die Molekulargewichte der nicht hydrolysierten Blockpolymere aus tert.-Butylacrylat und Methylmethacrylat wurden mittels Gelpermeationschromatographie (GPC) bestimmt: Als Eluent diente Tetrahydrofuran, die Probenkonzentration lag bei 2 g/l, das Injektionsvolumen bei 0.1 ml, der Fluß bei 1 ml/min. Detektiert wurde der Brechungsindex (RI) und die die UV-Absorbanz (UV) bei 277 nm und 340 nm. Die GPC wurden mit Polymethylmethacrylat-Standards kalibriert.
1b Blockpolymerzusammensetzung:
   Die nicht hydrolysierten Polymerisate wurden hinsichtlich der relativen Anteile eingebauter Monmere mittels ¹H-NMR-Spektroskopie untersucht. Der Anteil von Blockpolymeren mit eingebautem Fluoreszenzmarker bezogen auf die Gesamptpolymermenge X_{F} wurde ebenfalls mittels ¹H-NMR-Spektroskopie bestimmt.
   Die Anzahl freier Säuregruppen in den hydrolysierten Blockpolymeren wurde durch potentiometrische Titration ermittelt.
1c Fluoreszenzmessung:
   Die Fluoreszenzmessung erfolgte mittels eines Fluoreszenzspektrometers SPEX Fluorolog 2. Die Spektren wurden von mit Sauerstoff gesättigten Proben in 10x10 mm Quarzküvetten bei rechtwinkliger Geometrie aufgenommen. Die Anregung erfolgte bei einer Wellenlenge von 288 nm, die Integration erfolgte mit 0.5 sec/0.5 nm. Die Spaltöffnungen betrugen auf der Einstrahlungsseite 0,5 mm und auf der Detektorseite 2 mm.

2) Herstellung von amphiphilen Di-Blockpolymeren BP1 bis BP7 durch anionische Polymerisation (vgl. Macromolecules 1991, 24, 4997)
a) Herstellung der Initiatorlösung (Initiator: Diphenylhexyllithium)
   Tetrahydrofuran (Fa. Riedel de Haen, chromasolv) wurde durch Zusatz von n-Butyllithium getrocknet (die Endpunktanzeige erfolgte mittels Styrol; verbliebenes, nicht hydrolysiertes n-Butyllithium löst anionische Polymerisation des Styrol aus; die intensive rote Farbe der dabei entstehenden Styrol-Makroanionen fungiert als Indikator) und durch mehrfaches Vakuumziehen entgast. Nach beendeter Trocknung wurden 90 ml Tetrahydrofuran unter Vakuum abdestilliert und durch dreimaliges Einfrieren, Vakuumziehen und Auftauen von letzten O₂-Spuren befreit.
   Unter Inertgasatmosphäre wurden in den 90 ml wasser- und sauerstoffreien THF zunächst 6 ml n-Butyllithium (als 1,6 molare Lösung in Hexan von der Fa. Acros) homogen gelöst. Dann wurde eine dazu äquivalente Menge (1,8 ml = 10 mmol) an Diphenylethylen (Fa. Fluka, purum) zugegeben (es entstand unmittelbar dunkelrotes Diphenylhexyllithium). Anschließend wurde das sauerstoff- und wasserfreie Gemisch bei 20°C noch 2 Tage unter Lichtausschluß geschüttelt. Der Gehalt an gebildetem Initiator wurde abschließend durch eine Testpolymerisation von Methylmethacrylat und anschließende Molekulargewichtsbestimmung des gebildeten Polymerisats mittels Gelpermeationschromatographie bestimmt.
b) Vorbereitung der Monomeren
   I. Methylmethacrylat
      30 g Methylmethacrylat wurden durch mehrmaliges kurzzeitiges Vakuumziehen entgast. Danach wurde zur Desaktivierung protisch aktiver Verunreinigungen so viel Triethylaluminium (als 15 gew.-%ige Lösung in Hexan, Fa. Fluka, purum) zugesetzt, bis eine merkliche Gelbfärbung eintrat (dies war nach einer Zugabe von 2,4 ml der Hexanlösung der Fall). Dann wurde nochmals kurzzeitig Vakuum gezogen und schließlich 2/3 an reinem Monomeren unter Vakuum abdestilliert, eingefroren und nochmals Vakuum gezogen.
   II. tert.-Butylacrylat
      Mit einer entsprechenden Menge tert.-Butylacrylat wurde in entsprechender Weise wie mit den 30 g Methylmethacrylat verfahren. Abschließend wurde das tert.-Butylacrylat jedoch mit sauerstoff- und wasserfreiem THF auf das 3-fache seines Volumens verdünnt. Bis zum Gebrauch wurde auch diese tert. -Butylacrylat/THF-Lösung gefroren aufbewahrt.
c) Anionische Polymerisation (sauerstoff- und wasserfrei)
   In einem Polymerisationsgefäß wurden 1,5 g wasserfreies LiCl (verbessert die Initiatorqualität durch Auflösung von Dimeren etc.) vorgelegt. Dann wurden 400 ml Tetrahydorfuran zukondensiert und 66,35 g der vorbereiteten Initiatorlösung zugesetzt und das entstehende Gemisch mittels flüssigem Stickstoff bis knapp über den Gefrierpunkt von Tetrahydrofuran (-108,5°C) gekühlt. Unter kräftigem Rühren wurden anschließend innerhalb von 2 Minuten 23 g tert. -Butylacrylat (als vorbereitete THF-Lösung) zugetropft. Das flüssige Gemisch wurde 15 min unter Rühren bei -78°C gehalten. Dann wurden unter fortgeführtem Rühren innerhalb von 1 Minute 18 g des vorbereiteten Methylmethacrylat zugetropft und das Reaktionsgemisch weitere 15 min bei -78°C gerührt. Anschließend wurde die anionische Polymerisation durch Zusatz von 5 ml entgastem und mit wenigen Tropfen Essigsäure versetztem Methanol abgebrochen. Das Reaktionsgemisch wurde sodann auf Raumtemperatur erwärmt, ein Teil des Lösungsmittels im Vakuum abgezogen und dann das gebildete Blockpolymer in 1,5 l eines Methanol/Wasser- (im Volumenverhältnis 2:1)-Gemisches ausgefällt und über Nacht bei 50°C im Vakuumschrank getrocknet.
   Mittels ¹H-NMR (200 MHz) in einer CDCl₃-Lösung wurde ein molares Verhältnis von 1:1 der eingesetzten Ausgangsmonomeren im gebildeten Blockpolymer verifiziert. Das relative zahlenmittlere Molekulargewicht Mₙ des gebildeten Blockpolymeren wurde mittels Gelpermeationschromatographie zu 8758 ermittelt. Das relative gewichtsmittlere Molekulargewicht M_{w} betrug 9957. Das häufigste relative Molekulargewicht lag bei 9678. Dem entspricht ein mittleres Blockpolymer von
   [tert.-Butylacrylat]₃₉[Methylmethacrylat)₃₉.
d) Selektive Hydrolyse des tert.-Butylacrylat
   20 g des Blockpolymeren wurden in 100 ml Dioxan gelöst und mit 11 ml 37 gew.-%iger wäßriger HCl 4 h bei 80°C gerührt. Nach Abkühlung auf 25°C wurde das resultierende Polymer in n-Heptan (p.a., Fa. Merck) gefällt, abfiltriert, mit n-Heptan gewaschen und anschließend 1 Woche bei 80°C im Vakuumschrank getrocknet (in allen anderen Fällen erfolgte die Isolierung durch Gefriertrocknung aus Dioxan).

Mittels ¹H-NMR (200 MHz) in einer CD₃OD-Lösung wurde die Selektivität und Vollständigkeit der Hydrolyse bestätigt.
Es wurde somit ein hydrophiles Blockpolymer BP1
[Acrylsäure]₃₉[Methylmethacrylat]₃₉
erhalten.
In entsprechender Weise wurden die nachfolgenden hydrophilen Blockpolymere BP2 bis BP7 hergestellt:
- BP2:: [Acrylsäure]₇₉ [Methylmethacrylat]₃₉
- BP3:: [Acrylsäure]₃₃ [Methylmethacrylat]₃₆
- BP4:: [Acrylsäure]₁₀₅ [Methylmethacrylat]₃₅
- BP5:: [Acrylsäure]₃₀ [Methylmethacrylat]₂₈
- BP6:: [Acrylsäure]₃₀ [Methylmethacrylat]₂₅
- BP7:: [Acrylsäure]₂₆ [Methylmethacrylat]₁₈

3) Herstellung von Endgruppen-funktionalisierten Blockcopolymeren
Analog Beispiel 2a wurde eine Initiatorlösung aus 12 ml u-Butyllithium (1,6 molar in Hexan) und 3,6 ml Diphenylethylen in 100 ml THF hergestellt.
Analog Beispiel 2c wurden 0,8 g wasserfreies Lithiumchlorid vorgelegt, 400 ml THF zukondensiert und 22,4 g Initiatorlösung zugegeben. Man kühlte auf -70°C und gab unter Beibehaltung der Temperatur 18,9 g tert Butylacrylat zu. Nach weiteren 15 min. gab man bei der gleichen Temperatur 730 mg 1-Brommethylpyren, gelöst in Tetrahydrofuran, zu und ließ 1 h bei -70°C nachreagieren. Dann gab man vorsichtig Methanol zu. Zweifaches Umfällen aus Methanol/Wasser 2:1 ergab 24.5 g (92%) Blockcopolymer BP8:
- BP8:: [t-Butylacrylat]₄₅[Methylmethacrylat]₂₀-CH₂-(1-pyrenyl)

Auf ähnliche Weise wurden erhalten:
- BP9:: [t-Butylacrylat]₃₅[Methylmethacrylat)₃₅-CH₂-(2-naphthyl)
- BP10:: [t-Butylacrylat]₄₀[Methylmethacrylat]₄₀-CH₂-(1-pyrenyl)
- BP11:: [t-Butylacrylat]₄₀[Methylmethacrylat]₂₀-CH₂-(2-naphthyl)

Das Molekulargewicht der Blockcopolymere wurde mittels Gelpermeationschromotographie bestimmt. Das Verhältnis der im Blockcopolymer eingebauten Monomere (tert.-Butylacrylat:Methylmethacrylat) und der Endgruppenfunktionalisierungsgrad X_{F} (Anteil Pyren- bzw. Naphthalin-funktionalisierte Polymere zu nicht funktionalisierten Monomeren) wurde mittels 1HR-NMR-Spektroskopie ermittelt (Tabelle 1).

| Verbindung | Molekulargewicht Mᵤ | | tBuA:MMA³⁾ | X_{F}⁴⁾ |
|---|---|---|---|---|
| | GPC (RI)¹⁾ | GPC (UV)²⁾ | | |
| BP 8 | 8 600 | 7 800 | 2,2 : 1 | 0,6 |
| BP 9 | 9 500 | 8 800 | 1 : 1 | 0,6 |
| BP 10 | 10 200 | 9 200 | 1 : 1 | 0,75 |
| BP 11 | 9 200 | 8 300 | 2,1 : 1 | 0,45 |

| | | | | |
|---|---|---|---|---|
| 1) Detektion des Brechungsindex | | | | |
| 2) Detektion der UV Absorbanz (277 nm und 340 nm) | | | | |
| 3) Verhältnis eingebautes tert. Butylacrylat zu Methylmethacrylat | | | | |
| 4) Funktionalisierungsgrad | | | | |

Die Polymere BP8 bis BP11 wurden anschließend wie in Bsp. 2d beschrieben einer sauren Hydroslyse unterworfen. Hierbei wurden die Blockcopolymere
- BP8a:: [Acrylsäure]₄₅[Methylmethacrylat]₂₀-CH₂-(1-pyrenyl)
- BP9a:: [Acrylsäure]₃₅[Methylmethacrylat]₃₅-CH₂-(2-naphthyl)
- BP10a: [Acrylsäure]₄₀[Methylmethacrylat]₄₀-CH₂-(1-pyrenyl)
- BP11a: [Acrylsäure]₄₀[Methylmethacrylat)₂₀-CH₂-(2-naphthyl)
erhalten. Die Hydrolyse war laut ¹H-NMR vollständig.
4) Herstellung einer wässrigen Polymerisatdispersion nach der Methode der radikalischen wässrigen Emulsionspolymerisation unter Zusatz des NH⊕₄-Salzes von BP7, NaCl als wasserlösliches Salz und Stärke¹ als Schutzkolloid.
Eine ammonikalische Lösung des Blockpolymeren wurde zusammen mit NaCl unter Zusatz von Wasser im Polymerisationsgefäß vorgelegt. Dann wurde die Vorlage auf 90°C erwärmt und anschließend auf einmal mit 30 Gew.-% eines Zulauf 2 versetzt. Zwei Minuten später wurden dem Polymerisationsgefäß die verbliebene Menge an Zulauf 2 (innerhalb von 2 h) und ein Zulauf 1 (innerhalb von 1 h und 30 min) zeitgleich beginnend unter Aufrechterhaltung der 90°C räumlich getrennt kontinuierlich zugeführt. Nach Beendigung der Zuläufe wurde das Polymerisationsgemisch noch 1 h bei 90°C gerührt und dann auf Raumtemperatur abgekühlt.
Vorlage: Lösung aus

| | |
|---|---|
| Blockpolymer BP7 | 0,6 g |
| Ammoniaklösung (wässrig 25 gew.%ig) | 0,3 g |
| Stärke¹ | 1,5 g |
| Natriumchlorid | 0,3 g |
| entionisiertes Wasser | 31,6 g |

| Zulauf 1: | |
|---|---|
| Methylmethacrylat | 15 g |
| n-Butylacrylat | 15 g |

| Zulauf 2: | |
|---|---|
| entionisiertes Wasser | 15g |
| Natriumperoxidsulfat | 0,15 g |

| | |
|---|---|
| ¹⁾Stärke C-Pur 01915 der Cerestar Deutschland GmbH, Krefeld: Verzuckerte Stärke mit M_{w} 6680-8350 (nach GPC) einer Uneinheitlichkeit Mw/Mn 6,8-8,4 und einer Viskosität (40 gew.%ig wässrige Lösung, 20°C) von 0,021 Pa.s. | |

5) Untersuchung des Förster-Transfers in Lösungen aus donormarkierten Blockcopolymeren und akzeptormarkierten Blockcopolymeren in Abhängigkeit von der Elektrolytkonzentration.
Zur Untersuchung der Salzabhängigkeit der Bildung gefrorener Micellen aus [Acrylsäure]ᵢ [Methylmethacrylat]ⱼ Di-Blockpolymeren wurde eine Mischung zweier hinsichtlich ihrer Blöcke vergleichbar aufgebauter Di-Blockpolymere, von denen eines mit dem Donor Naphthalin (BP11a) und eines mit dem Akzeptor Pyren BP8a) kovalent markiert war. Die Mischung von BP und BP wurde so gewählt, daß die Pyrenfluoreszenz I_{P} (Maximum: 397 nm) und die Naphthalinfluoreszenz I_{N}(Maximum: 336 nm) einer salzfreien Lösung der Blockcopolymere etwa vergleichbare Intensitäten aufwiesen (Eine geeignete Zusammensetzung der Mischung anhand der Fluoreszenzintensität von 1-Hydroxymethylpyren und 2-Methylnaphthalin abgeschätzt; sie liegt bei etwa 5:1 für BP11a : BP8a). Dann wurde von der Mischung der Di-Blockpolymere eine wäßrige Lösungen ihres Na-Salzes hergestellt: Hierzu wurden 120 mg Di-Blockpolymere (vollsauer gerechnet) in 1 l Wasser bzw. einer Natrium-Chlorid enthaltenden Salzlösung gelöst und mittels potentiometrischer Titration mit NaOH neutralisiert.

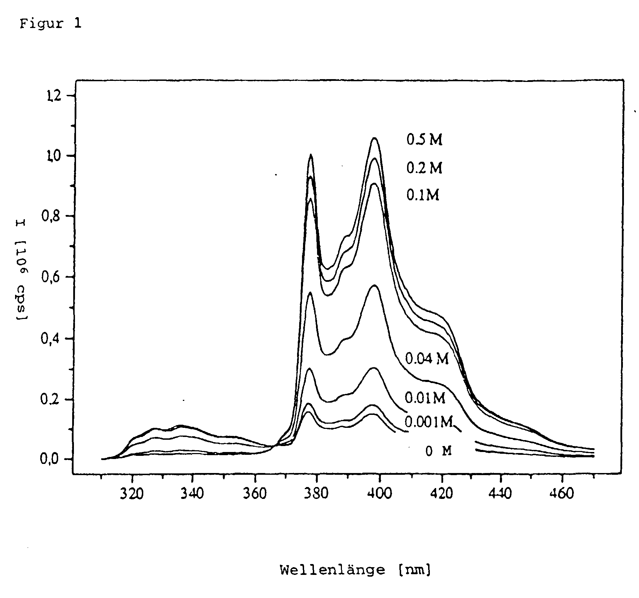

Figur 1 zeigt die Fluoreszenzspektren der oben beschriebenen Mischung aus BP8a und BP11a bei verschiedenen Natriumchlorid-Konzentrationen.

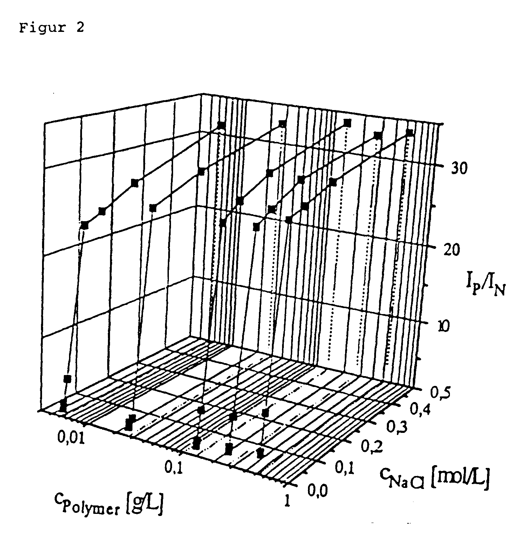

Figur 2 gibt die Abhängigkeit des Intensitätsverhältnisses I_{P}/I_{N} der Flureszenzmaxima des Pyrenchromophors von BP10a (I_{P}) und Naphthalinchromophors von BP9a (I_{N}) für Mischungen aus BP11a und BP9a bei verschiedenen Polymerkonzentrationen von der Natriumchloridkonzentration (c(NaCl)) wieder. c(NaCl): 0; 10⁻³; 10⁻²; 0.05; 0,1; 0,2; 0,5 mol/l.

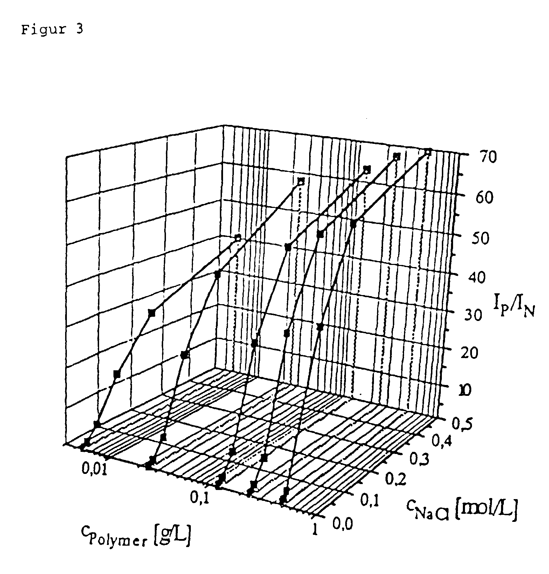

Figur 3 gibt die Abhängigkeit des Intensitätsverhältnisses I_{P}/I_{N} der Flureszenzmaxima des Pyrenchromophors von BP8a (I_{P}) und Naphthalinchromophors von BP11a (I_{N}) für Mischungen aus BP8a und BP11a bei verschiedenen Polymerkonzentrationen von der Natriumchloridkonzentration (c(NaCl)) wieder. c(NaCl): 0; 10⁻³; 10⁻²; 0.05; 0,1; 0,2; 0,5 mol/l.
Die Zunahme des I_{P}/I_{N}-Verhältnisses mit steigender Salzkonzentration (Figur 1) ist Anzeichen für einen verstärkten Förster-Transfer und zeigt somit die Zunahme der mittleren aufenthaltsdauer der Blockpolymere in der Mizelle an (gefrorene Mizellen). Figur 2 und 3 zeigen weiterhin, daß dieser Effekt im wesentlichen von det Salzkonzentration abhängt, hingegen weitgehend unabhängig von der Polymerkonzentration ist.
¹⁾Stärke C-Pur 01915 der Cerestar Deutschland GmbH, Krefeld: Verzuckerte Stärke mit M_{w} 6680-8350 (nach GPC) einer Uneinheitlichkeit Mw/Mn 6,8-8,4 und einer Viskosität (40 gew.%ig wässerige Lösung, 20°C) von 0,021 Pa.s.

## Patentansprüche

1. Verfahren zur Herstellung wässriger Polymerisatdispersionen durch Polymerisation wenigstens einfach ungesättigter Monomere nach der Methode der radikalischen, wässrigen Emulsionspolymerisation, dadurch gekennzeichnet, daß man vor und/oder während der Polymerisationsreaktion ein wasserlösliches, neutrales Salz und eine amphiphile Substanz zusetzt, die unter Polymerisationsbedingungen in Form von gefrorenen Micellen vorliegt.

2. Verfahren nach Anspruch 1, dadurch gekennzeichnet, daß das wasserlösliche, neutrale Salz, bezogen auf die im Polymerisationsgefäß befindliche wässrige Phase stets in einer Konzentration oberhalb 10⁻² Mol/l vorliegt.

3. Verfahren nach Anspruch 1 oder 2, dadurch gekennzeichnet, daß man die amphiphile Substanz zusammen mit dem wasserlöslichen, neutralen Salz in Form einer wässrigen Lösung dem Polymerisationsgefäß zusetzt.

4. Verfahren nach einem der vorhergehenden Ansprüche, dadurch gekennzeichnet, daß das wasserlösliche, neutrale Salz ausgewählt ist unter den Alkali- und Erdalkalisalzen von Mineralsäuren.

5. Verfahren nach Anspruch 4, dadurch gekennzeichnet, daß das wasserlösliche, neutrale Salz ausgewählt ist unter Alkalimetallhalogeniden, Erdalkalimetallhalogeniden, Alkalimetallsulfaten und Alkalimetallphosphaten.

6. Verfahren nach einem der vorhergehenden Ansprüche, dadurch gekennzeichnet, daß es sich bei der amphiphilen Substanz um ein linear aufgebautes Blockpolymer, enthaltend wenigstens einen hydrophilen Homo- oder Cooligomerblock [A]ₐ, der sich von wasserlöslichen Monomeren A ableitet, worin a für das Zahlenmittel der in [A]ₐ eingebauten Monomere A steht, und wenigstens einen hydrophoben Homo- oder Cooligomerblock [B]_{b}, der sich von Monomeren B mit einer Wasserlöslichkeit < 50 g/l (25°C, 1 Atmosphäre) ableitet, worin b für das Zahlermittel der in [B]_{b} eingebauten Monomere B steht sowie gegebenenfalls Einheiten I und T an den Enden der Blockpolymerkette und gegebenenfalls Einheiten S zwischen den Monomerblöcken.

7. Verfahren nach Anspruch 6, dadurch gekennzeichnet, daß die Monomere A ausgewählt sind unter ethylenisch ungesättigten Mono- oder Dicarbonsäuren mit 3 bis 6 C-Atomen, 2-Acrylamido-2-methylpropansulfonsäure, Styrolsulfonsäuren, Vinylsulfonsäuren sowie den Alkalimetall- und Ammoniumsalzen der vorgenannten Säuren, N-Vinylpyrrolidon, Vinylalkohol, Ethylenoxid und Propylenoxid.

8. Verfahren nach Anspruch 6 oder 7, dadurch gekennzeichnet, daß die Monomere B ausgewählt sind unter vinylaromatischen Verbindungen, Vinylestern von C₁-C₈-Alkancarbonsäuren, C₁-C₈-Alkylestern ethylenisch ungesättigter Monocarbonsäuren mit 3 bis 6 C-Atomen, C₄-C₁₀-Dienen und C₃-C₆-Olefinen.

9. Verfahren nach einem der Ansprüche 6 bis 8, dadurch gekennzeichnet, daß b eine Zahl ≧ 5 ist, und die Anzahl der im Blockpolymeren eingebauten Monomere A wenigstens 50 % der im Blockpolymer eingebauten Monomere B ausmacht.

10. Verfahren nach Anspruch 9, dadurch gekennzeichnet, daß b ≧ 10 ist.

11. Verfahren nach Anspruch 10, dadurch gekennzeichnet, daß b ≧ 20 ist.

12. Verfahren nach einem der Ansprüche 9 bis 11, dadurch gekennzeichnet, daß die Summe aller Nonomere A die Summe aller Monomere B im Blockpolymeren übersteigt.

13. Verfahren nach einem der Ansprüche 6 bis 12, dadurch gekennzeichnet, daß es sich bei dem Blockpolymer um ein Diblockpolymer der allgemeinen Formel I oder I'
[A]ₐ[B]_{b} (I)
[B]_{b}[A]ₐ (I')
handelt, worin A, B, a und b die in den Ansprüchen 6 bis 12 angegebenen Bedeutungen besitzen.

14. Verfahren nach einem der Ansprüche 6 bis 12, dadurch gekennzeichnet, daß es sich bei dem Blockpolymer um ein Triblockpolymer der allgemeinen Formel II
[A]ₐ[B]_{b}[A']_{a'} (II)
handelt, worin A bzw. A', B, a bzw. a' und b die in den Ansprüchen 6 bis 12 angegebenen Bedeutungen besitzen.

15. Verfahren nach einem der vorhergehenden Ansprüche, dadurch gekennzeichnet, daß die zu polymerisierenden, wenigstens einfach ungesättigten Monomere
70 bis 100 Gew.-%, bezogen auf die Gesamtmonomermenge, C₁-C₁₂-Alkylester der Acryl- und/oder Methacrylsäure und/oder Styrol oder
70 bis 100 Gew.-% Vinylchlorid und/oder Vinylidenchlorid oder
70 bis 100 Gew.-% Styrol und/oder Butadien, oder
40 bis 100 Gew.-% Vinylacetat, Vinylpropionat und/oder Ethylen
umfassen.

16. Verfahren nach einem der vorhergehenden Ansprüche, dadurch gekennzeichnet, daß die Polymerisation nach dem Zulaufverfahren erfolgt.

17. Verfahren nach einem der vorhergehenden Ansprüche, dadurch gekennzeichnet, daß die Gesamtmenge der zuzusetzenden amphiphilen Substanz im Polymerisationsgefäß vorgelegt wird.

18. Verfahren nach einem der Ansprüche 1 bis 16, dadurch gekennzeichnet, daß wenigstens ein Teil der zuzusetzenden amphiphilen Substanz erst nach Beginn der Polymerisationsreaktion zugesetzt wird.

19. Wässrige Polymerisatdispersion, erhältlich nach einem Verfahren gemäß einem der Ansprüche 1 bis 18.

20. Polymerisatpulver, erhältlich durch Trocknung einer wäßrigen Polymerisatdispersion aus Anspruch 19.
